# EUROPEAN PATENT SPECIFICATION

(11) **EP 2 224 263 B1**
(45) Date of publication and mention of the grant of the patent: **04.01.2012**
(21) Application number: 10152031.0
(22) Date of filing: 28.01.2010
(51) Int. Cl.: G01S 17/93

(54) **Automated landing zone site surveying**
Automatisierte Landeplatzvermessung
Analyse automatisée de site de zone d'atterrissage

(30) Priority: 09.02.2009 US 368142
(43) Date of publication of application: 01.09.2010
(73) Proprietor: Honeywell International Inc., Morristown, NJ 07962 (US)
(72) Inventor: Becker, Robert Charles, Morristown, NJ 07962-2245 (US); Cornett, Alan, Morristown, NJ 07962-2245 (US); Spoor, David Todd, Morristown, NJ 07962-2245 (US)
(74) Representative: Buckley, Guy Julian

(56) References cited:
- US-A1- 2007 075 893

## Description

### BACKGROUND OF THE INVENTION

Whenever military or emergency medical services are performing landing in the field, often there are obstacles that must be avoided when approaching the landing zone. Avoiding these obstacles is imperative to a successful landing. The problem becomes acute at night when visibility is reduced. A device that could automatically survey a site to locate and map obstacles would greatly improve the operation ability and safety of these types of landings and significantly expand the areas into which landings could safely occur.

US 2007/075893 discloses a method of determining an estimated speed of an aircraft relative to the ground being overthrown by the aircraft in which the sum of an acceleration measurement plus a difference value obtained from an observation of signals rating to a region of the ground are used.

### SUMMARY OF THE INVENTION

The present invention in its various aspects is as set out in the appended claims. In an embodiment, an imaging system includes a processor, a detection assembly configured to collect survey data characterizing a respective height and location of physical features of a geographic region, a receiver assembly configured to provide location data characterizing a geolocation of the geographic region, a tilt sensor configured to provide tilt data characterizing an inclination of the detection assembly with respect to gravity, and a magnetic-field sensor configured to provide field data characterizing a magnetic field associated with the geographic region. The processor is configured to perform processing of the survey data and tilt data to yield a first corrected data set, obtain magnetic-deviation data associated with the geographic region, determine an indication of true north, process the first corrected data set and true-north indication to yield a second corrected data set comprising the first corrected data set oriented to true north, and produce from the second corrected data set a three-dimensional depiction of the geographic region displayable on a display device.

### BRIEF DESCRIPTION OF THE DRAWINGS

Preferred and alternative embodiments of the present invention are described in detail below with reference to the following drawings.

Figure 1 illustrates an exemplary system formed in accordance with an embodiment of the present invention; and

Figure 2 illustrates schematically a landing and approach zone to be surveyed according to an embodiment by the system of Figure 1.

### DETAILED DESCRIPTION OF THE PREFERRED EMBODIMENT

An embodiment of the invention automatically surveys the terrain of a target landing zone for dimensions and locations of potential obstacles to landing therein. This survey information is corrected for inclination of the surveying system of the embodiment and oriented to true north. The resultant data is processed to produce a three-dimensional image or map of approaches to the landing zone, as well as the landing zone itself. This data and/or the 3-D image can be transmitted to the flight crews of one or more aircraft desiring to enter the landing zone. Using this data, the flight crews can plot a safe approach to the landing zone through a virtual image of the obstacles. Alternatively, the survey data can be used to calculate safe approach paths consisting of directions and altitudes, and the safe approaches and this information can be transmitted to the flight crews of one or more aircraft desiring to enter the landing zone. An embodiment may be mounted to, or otherwise carried by, a platform, such as a stationary platform or a mobile platform, such as a manned aircraft, an unmanned aerial vehicle, or a land-based vehicle.

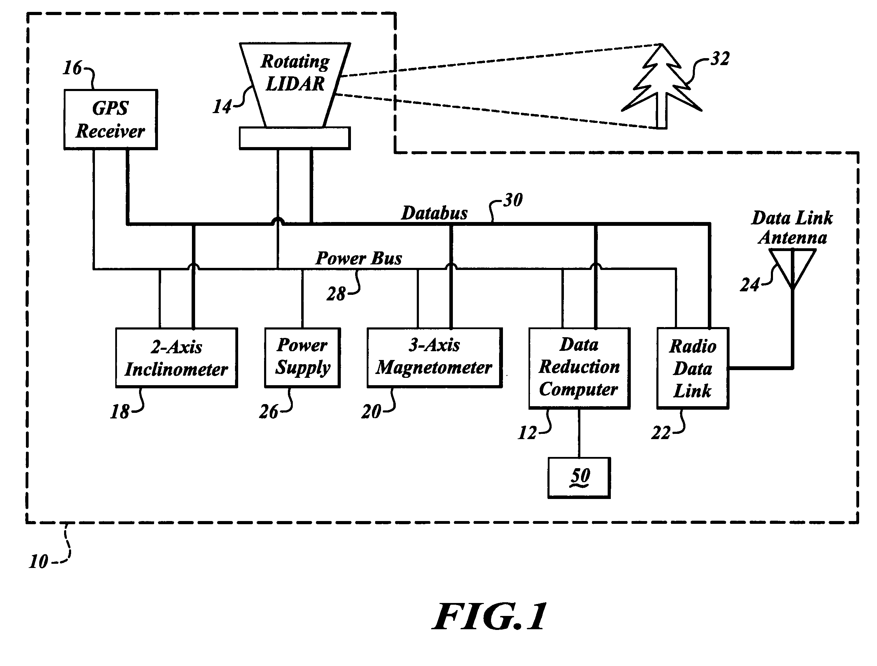

FIG. 1 illustrates a system 10 according to an embodiment, and in which an embodiment of the invention may be implemented. The system 10 illustrated in FIG. 1 typically includes at least one component, such as data reduction computer 12, including at least some form of computer readable media, which may be associated with one or more processors and/or memory devices. Computer readable media can be any available media that can be accessed by one or more components of such operating environment. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by one or more components of such operating environment. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

The invention may be described in the general context of computer-executable instructions, such as program modules, executed by one or more computer processors or other devices. Generally, program modules include routines, programs, objects, components, data structures, etc. that perform particular tasks or implement particular abstract data types. Typically the functionality of the program modules may be combined or distributed as desired in various embodiments.

Referring again to FIG. 1, the system 10 (generally defined in FIG. 1 by a dashed border) includes a processor, such as a data reduction computer 12, a LIDAR unit 14, a GPS receiver 16, a tilt sensor, such as a two-axis inclinometer 18, a magnetic-field sensor, such as a three-axis magnetometer 20, a radio data link assembly 22, a data link antenna 24, and a power supply 26 that may provide power to one or more of the system components via a power bus 28. The system 10 may further include a data bus 30 configured to enable data transfer among the system components.

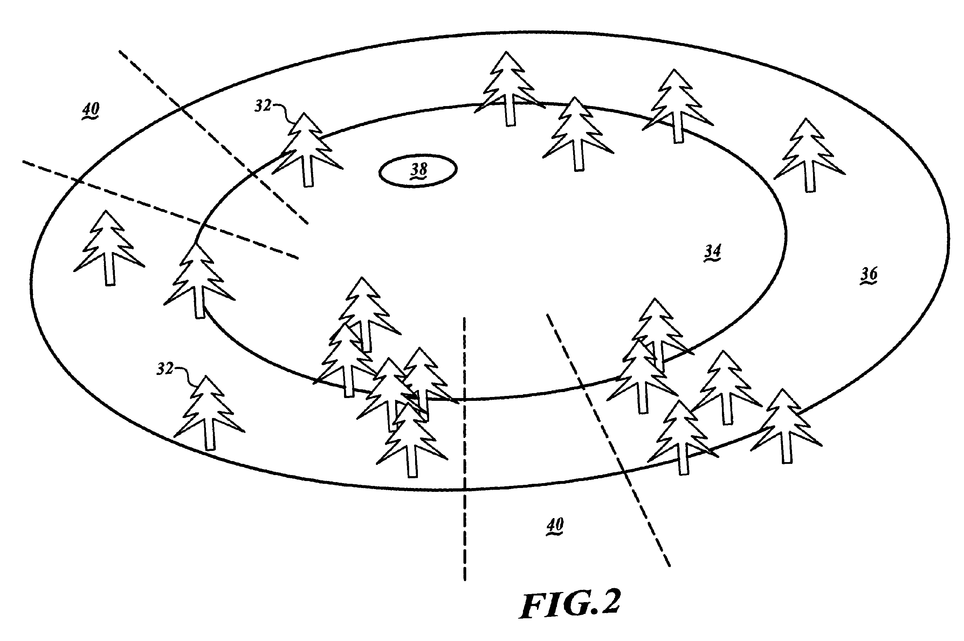

In operation, and in an embodiment, the system 10 is brought into a proximity of a desired landing zone 34 (FIG. 2) of predetermined size, the proximity location being sufficient to enable the LIDAR unit 14 to scan the landing zone and a vicinity (i.e., approach zone 36, as shown in FIG. 2) thereof of predetermined size. A survey planner having access to the system 10 may, using the computer 12, select or otherwise input a center reference point coordinate in an approximate center of the predetermined landing zone 34 and approach zone 36. Alternatively, the survey planner may select or otherwise input a set of coordinates defining the landing zone 34 and/or approach zone 36.

The rotating LIDAR unit 14 is then programmed, or is otherwise configured, to automatically scan the terrain of the landing zone 34 and approach zone 36 to survey one or more obstacles 32 (e.g., trees, rock formations, buildings, etc.) present therein. More specifically, the LIDAR unit 14 may determine the locations/coordinates and one or more dimensions (e.g., height and/or area) of a predetermined threshold dimension (e.g., minimum height and/or area of a specified measurement-unit quantity) of the obstacles 32. The LIDAR unit 14 may be moved or transported to other locations in the landing zone if necessary to gain a complete picture of the landing zone.

The inclinometer 18 is configured to measure a tilt angle of the LIDAR unit 14 with respect to a reference, such as gravity. This tilt-measurement information may then used by the computer 12 to correct the measured obstacle dimension and location.

The GPS receiver 16 is configured to provide the geolocation of the landing zone 34. The magnetometer 20 is configured to provide field data characterizing the terrestrial magnetic field associated with the location of the system 10. The magnetometer 20 and inclinometer 18 combine to provide the functionality of a three-axis compass that indicates to the computer 12 the direction of magnetic north, regardless of the tilt angle of the magnetometer. Alternatively, the direction of magnetic north may be determined using solely the field data provided by the magnetometer 20.

The system 10 may further include a memory device 50 operable to store data retrievable by the computer 12. Specifically, the memory device 50 may be configured to store a look-up table of magnetic-field-deviation data associated with the GPS position of the zones 34, 36. Alternatively, the field-deviation data may be stored in a location external to the system 10 and retrievable by the computer 12. The computer 12 may use this field-deviation data to correct the magnetometer 20 measurement of north relative to true north. Consequently, the orientation of the survey data collected by the LIDAR unit 14 can be oriented relative to true north without having to physically rotate or otherwise reorient the system 10 to align with true north.

Subsequently, the comprehensively corrected data can be processed by the computer 12 to produce a three-dimensional obstacle map referenced to the GPS position of the zones 34, 36. For example, such a map may depict a virtual rendering of the location and orientation of the detected obstacles 32, as well as numerical data characterizing the coordinates and dimensions of the obstacles. Additionally, the map may be produced in a format allowing a heads-up or other display, in conjunction with onboard aircraft avionics, to provide a full-motion 3-D virtual image of obstacles 32 present in the approach and landing zones 34, 36 and corresponding to the aircraft's movement therethrough.

The radio link 22 and antenna 24 can be used to transmit the corrected data and or data representing the 3-D GPS-referenced map to the flight crews of selected aircraft desiring to approach and land in landing zone 34, or to a centralized collection point for distribution to pilots flying to the landing zone.

As illustrated in FIG. 2, the survey and/or map data may allow approaching aircraft to plot or otherwise discern a target landing area 38 within the landing zone 34, as well as one or more navigable approach routes 40 enabling such aircraft to safely land in the target area.

While a preferred embodiment of the invention has been illustrated and described, as noted above, many changes can be made without departing from the scope of the invention. Accordingly, the scope of the invention is not limited by the disclosure of the preferred embodiment. Instead, the invention should be determined entirely by reference to the claims that follow.

## Claims

1. An imaging system (10) configured to be implemented on a platform, the system comprising:
a processor (12);
a detection assembly (14) coupled to the processor and configured to collect survey data characterizing a respective height and location of physical features of a geographic region;
a receiver assembly (16) coupled to the processor and configured to provide location data characterizing a geolocation of the geographic region;
a tilt sensor (18) coupled to the processor and configured to provide tilt data characterizing an inclination of the detection assembly with respect to gravity; and
a magnetic-field sensor (20) coupled to the processor and configured to provide field data characterizing a magnetic field associated with the geographic region;
**characterised in that** the processor is configured to:
perform processing of the survey data and tilt data to yield a first corrected data set,
obtain, based on the location data, magnetic-deviation data associated with the geographic region,
determine, from the field data and magnetic-deviation data, an indication of true north,
process the first corrected data set and true-north indication to yield a second corrected data set comprising the first corrected data set oriented to true north, and
produce from the second corrected data set a three-dimensional depiction of the geographic region displayable on a display device.

2. The system (10) of claim 1 wherein the processor (12) is further configured to transmit the second corrected data set to at least one aircraft.

3. The system (10) of claim 1, further comprising a memory device (50) configured to store the magnetic-deviation data.

4. The system (10) of claim 1 wherein the platform comprises an aircraft.

5. The system (10) of claim 1 wherein the detection assembly (14) comprises a LIDAR unit.

6. The system (10) of claim 1 wherein the receiver assembly (16) comprises a GPS receiver.

7. The system (10) of claim 1 wherein the tilt sensor (18) comprises an inclinometer.

8. The system (10) of claim 1 wherein the magnetic-field sensor (20) comprises a three-axis magnetometer.

9. A computer-readable medium including instructions that, when executed by a processor (12) onboard a platform, enable the processor to perform steps comprising:
obtain survey data characterizing a respective height and location of physical features of a geographic region, location data characterizing a geolocation of the geographic region, tilt data characterizing an inclination of the platform with respect to gravity, and field data characterizing a magnetic field associated with the geographic region;
perform processing of the survey data and tilt data to yield a first corrected data set;
obtain, based on the location data, magnetic-deviation data associated with the geographic region;
determine, from the field data and magnetic-deviation data, an indication of true north;
process the first corrected data set and true-north indication to yield a second corrected data set comprising the first corrected data set oriented to true north; and
produce from the second corrected data set a three-dimensional depiction of the geographic region displayable on a display device.

## Patentansprüche

1. Imaging-System (10), konfiguriert zur Implementierung auf einer Plattform, wobei das System Folgendes umfasst:
einen Prozessor (12);
eine Detektionsbaugruppe (14), die an den Prozessor gekoppelt und konfiguriert ist zum Sammeln von Vermessungsdaten, die eine jeweilige Höhe und einen jeweiligen Ort von physischen Merkmalen eines geografischen Gebiets kennzeichnen;
eine Empfängerbaugruppe (16), die an den Prozessor gekoppelt und konfiguriert ist zum Bereitstellen von Ortsdaten, die eine Geolokation des geografischen Gebiets kennzeichnen;
einen Kippsensor (18), der an den Prozessor gekoppelt und konfiguriert ist zum Bereitstellen von Kippdaten, die eine Neigung der Detektionsbaugruppe bezüglich Schwerkraft kennzeichnen; und
einen Magnetfeldsensor (20), der an den Prozessor gekoppelt und konfiguriert ist zum Liefern von Felddaten, die ein mit dem geografischen Gebiet assoziiertes Magnetfeld kennzeichnen;
**dadurch gekennzeichnet, dass**
der Prozessor konfiguriert ist zum:
Durchführen einer Verarbeitung der Vermessungsdaten und Kippdaten, um einen ersten korrigierten Datensatz zu ergeben,
Erhalten von mit dem geografischen Gebiet assoziierten Daten über eine magnetische Abweichung auf der Basis der Ortsdaten,
Bestimmen einer Anzeige des geografischen Nordens aus den Felddaten und Daten über die magnetische Abweichung,
Verarbeiten des ersten korrigierten Datensatzes und einer Anzeige des geografischen Nordens, um einen zweiten korrigierten Datensatz zu ergeben, der den auf den geografischen Norden orientierten ersten korrigierten Datensatz umfasst, und
Erzeugen, aus dem zweiten korrigierten Datensatz, einer dreidimensionalen Darstellung des geografischen Gebiets, die auf einer Displayeinrichtung angezeigt werden kann.

2. System (10) nach Anspruch 1, wobei der Prozessor (12) weiterhin konfiguriert ist zum Übertragen des zweien korrigierten Datensatzes an mindestens ein Flugzeug.

3. System (10) nach Anspruch 1, weiterhin umfassend eine Speichereinrichtung (50), die konfiguriert ist zum Speichern der Daten über die magnetische Abweichung.

4. System (10) nach Anspruch 1, wobei die Plattform ein Flugzeug umfasst.

5. System (10) nach Anspruch 1, wobei die Detektionsbaugruppe (14) eine LIDAR-Einheit umfasst.

6. System (10) nach Anspruch 1, wobei die Empfängerbaugruppe (16) einen GPS-Empfänger umfasst.

7. System (10) nach Anspruch 1, wobei der Kippsensor (18) einen Neigungswinkelmesser umfasst.

8. System (10) nach Anspruch 1, wobei der Magnetfeldsensor (20) einen Drei-Achsen-Magnetometer umfasst.

9. Computerlesbares Medium mit Anweisungen, die bei Ausführung durch einen Prozessor (12) an Bord einer Plattform es dem Prozessor ermöglichen, Schritte durchzuführen, die Folgendes umfassen:
Erhalten von Vermessungsdaten, die eine jeweilige Höhe und einen jeweiligen Ort von physischen Merkmalen eines geografischen Gebiets kennzeichnen, Ortsdaten, die eine Geolokation des geografischen Gebiets kennzeichnen, Kippdaten, die eine Neigung der Plattform bezüglich der Schwerkraft kennzeichnen, und Felddaten, die ein mit dem geografischen Gebiet assoziiertes Magnetfeld kennzeichnen;
Durchführen einer Verarbeitung der Vermessungsdaten und Kippdaten, um einen ersten korrigierten Datensatz zu ergeben;
Erhalten von mit dem geografischen Gebiet assoziierten Daten über die magnetische Abweichung auf der Basis der Ortsdaten;
Bestimmen einer Anzeige des geografischen Nordens aus den Felddaten und Daten über die magnetische Abweichung;
Verarbeiten des ersten korrigierten Datensatzes und der Anzeige über den geografischen Norden, um einen zweiten korrigierten Datensatz zu ergeben, der den auf den geografischen Norden orientierten ersten korrigierten Datensatz umfasst; und
Erzeugen, aus dem zweiten korrigierten Datensatz, einer dreidimensionalen Darstellung des geografischen Gebiets, die auf einer Displayeinrichtung angezeigt werden kann.

## Revendications

1. Système imageur (10) conçu pour être mis en oeuvre sur une plateforme, le système comprenant :
un processeur (12) ;
un ensemble de détection (14) relié au processeur et conçu pour collecter des données de lever caractérisant une hauteur et un emplacement respectifs d'entités physiques d'une région géographique ;
un ensemble récepteur (16) relié au processeur et conçu pour fournir des données d'emplacement caractérisant un emplacement géographique de la zone géographique ;
un gyro-détecteur d'inclinaison (18) relié au processeur et conçu pour fournir des données d'inclinaison caractérisant une inclinaison de l'ensemble de détection par rapport à la pesanteur ; et
un détecteur de champ magnétique (20) relié au processeur et conçu pour fournir des données de champ caractérisant un champ magnétique associé à la région géographique ;
**caractérisé en ce que** le processeur est conçu pour :
procéder au traitement des données de lever et des données d'inclinaison pour produire un premier ensemble de données corrigées,
obtenir, en fonction des données d'emplacement, des données de déviation magnétique associées à la région géographique,
établir, à partir des données de champ et des données de déviation magnétique, une indication du Nord vrai,
traiter le premier ensemble de données corrigées et l'indication du Nord vrai pour produire un deuxième ensemble de données corrigées comprenant le premier ensemble de données corrigées orienté selon le Nord vrai, et
produire à partir du deuxième ensemble de données corrigées une représentation tridimensionnelle de la région géographique affichable sur un dispositif d'affichage.

2. Système (10) selon la revendication 1, le processeur (12) étant en outre conçu pour transmettre le deuxième ensemble de données corrigées à au moins un aéronef.

3. Système (10) selon la revendication 1, comprenant en outre un dispositif mémoire (50) conçu pour enregistrer les données de déviation magnétique.

4. Système (10) selon la revendication 1, la plateforme comprenant un aéronef.

5. Système (10) selon la revendication 1, l'ensemble de détection (14) comprenant un module LIDAR.

6. Système (10) selon la revendication 1, l'ensemble récepteur (16) comprenant un récepteur GPS.

7. Système (10) selon la revendication 1, le gyro-détecteur d'inclinaison (18) comprenant un inclinomètre.

8. Système (10) selon la revendication 1, le capteur de champ magnétique (20) comprenant un magnétomètre triaxial.

9. Support lisible par ordinateur comportant des instructions qui, lorsqu'elles sont exécutées par un processeur (12) à bord d'une plateforme, permettent au processeur de réaliser des étapes consistant à :
obtenir des données de lever caractérisant une hauteur et un emplacement respectifs d'entités physiques d'une région géographique, des données d'emplacement caractérisant un emplacement géographique de la zone géographique, des données d'inclinaison caractérisant une inclinaison de la plateforme par rapport à la pesanteur, et des données de champ caractérisant un champ magnétique associé à la région géographique ;
procéder au traitement des données de lever et des données d'inclinaison pour produire un premier ensemble de données corrigées ;
obtenir, en fonction des données d'emplacement, des données de déviation magnétique associées à la région géographique ;
établir, à partir des données de champ et des données de déviation magnétique, une indication du Nord vrai ;
traiter le premier ensemble de données corrigées et l'indication du Nord vrai pour produire un deuxième ensemble de données corrigées comprenant le premier ensemble de données corrigées orienté selon le Nord vrai ; et
produire à partir du deuxième ensemble de données corrigées une représentation tridimensionnelle de la région géographique affichable sur un dispositif d'affichage.
